# EUROPEAN PATENT APPLICATION

(11) **EP 1 250 016 A1**
(43) Date of publication of application: **16.10.2002**
(21) Application number: 01303389.9
(22) Date of filing: 11.04.2001
(51) Int. Cl.: H04Q 7/22

(54) **Messaging in telecommunications systems**

(71) Applicant: LUCENT TECHNOLOGIES INC., Murray Hill, New Jersey 07974-0636 (US)
(72) Inventor: Allan, Robert Mark, Swindon, Wiltshire SN1 3NA (GB)
(74) Representative: Sarup, David Alexander

(57) **Abstract**

A method of running an application, or a set of applications, on a GPRS telecommunications system, comprising intercepting GPRS tunnelling messages between serving nodes (GGSN and SGSN) at an Intelligent Node (IN), and running the application at the Intelligent Node.

## Description

### Field of the Invention

This invention relates to messaging in telecommunications systems. In particular, but not exclusively, it relates to messaging in mobile telecommunications systems, such as GPRS systems, and especially to systems in which at least some users operate their mobile terminals on a prepaid basis.

Whilst traditionally mobile networks operated almost exclusively upon subscribers paying charges on a credit basis, i.e. paying a regular rental payment and then paying for calls made after they have made those calls, more recently, more and more users prefer to follow a pre-paid route in which they buy their telephone or a mobile terminal and then pay in advance for calls, typically buying tokens of a monetary value or "charging" their telephone with a fixed value of calls, using a credit card for example. Some networks nowadays implement almost all subscribers on such a prepaid basis. When a subscriber operates on a prepaid basis, it is important for the network to be able to recognise this, so that it can determine when the subscriber is using the network, how much to debit from his prepaid account and several other important factors, such as when he has run out of credit or when he is attempting to make calls which are not permissible under any contract.

### Background to the Invention

Presently, there is a defined delivery mechanism proposed for intelligent network services on GPRS, and this is known as CAMEL 3 (Customised Applications for Mobile Enhanced Logic). It is not, however, believed that this delivery mechanism will be widely deployed since it is expensive to develop and there is also a requirement to develop both messages and a state machine for the GPRS structure. CAMEL 3 is accordingly not seen as the ideal solution for delivery mechanisms for intelligent network services and in particular for prepaid systems.

Alternative proposals that have been made include the use of intelligent network (IN) solutions, such a ETSI INAP or other IN solutions with proprietary extensions. This approach requires a set of messages and a new state machine, together with significant testing of systems and integration and is likely to be much more difficult to implement even than a CAMEL 3 implementation.

Yet another alternative may be to use back office systems to collate billing records and then to provide an almost real time solution. This essentially involves sending details of transactions to a server which stores details of that customer and his prepaid status. This service will then not of course be in real time and therefore details of any session that the user has invoked will not be available immediately. This could be costly to the service provider since the user may be able, for a while, to obtain service when he should not be entitled to that service.

The present invention arose in an attempt to provide an improved system for messaging, and in particular for messaging related to prepaid customers.

### Summary of the Invention

According to the present invention there is provided a GPRS telecommunications system comprising a plurality of networks, wherein a mobile terminal which is associated with a first network, when using a second network, communicates via a serving node associated with the second network to a serving node associated with the first network, wherein GPRS tunnelling protocol messages between serving nodes are intercepted at an intelligent network node and wherein a specified application or set of applications is run at the intelligent network node.

Preferably, the application is one concerned with prepaid subscribers, but the application can be any suitable application related to the customer or the network.

Preferably, message interception is done by IP (Internet Protocol) masking. For example, when a serving node wishes to set up a communications session it first of all obtains an IP address (from a domain name server for example). A packet of data bearing this original address A is then masked by being included within a further packet having a second IP address B related to the address where interception of messages between the serving home nodes is located. Thus, the message is then redirected towards the interception address where the relevant processing can take place and is then forwarded on from this to the original destination. A similar process can occur for messages from a node to a serving node.

According to the present invention there is further provided a method of running an application, or a set of applications, on a GPRS telecommunications system, comprising intercepting GPRS tunnelling messages between serving nodes at an Intelligent Node, and running the application at the Intelligent Node.

### Description of the Drawings

Embodiments of the invention will now be described, by way of example only, with reference to the accompanying drawings, in which:
Figure 1 shows schematically part of a GPRS communications system;
Figure 2 shows IP address masking;
Figure 3 shows the steps involved in user initiated PDP context activation;
Figure 4 shows the steps involved in network initiating PDP context activation;
Figure 5 shows steps involved when changes in quality of service are initiated by an SGSN;
Figure 6 shows the steps involved in a user initiated deactivation method;
Figure 7 shows the steps involved in an SGSN initiated deactivation method;
Figure 8 shows the steps involved in a GGSN initiated deactivation method;
Figure 9 shows SCF initiated deactivation;
Figure 10 shows a situation where the amount of time, or volume of data prepaid by a user expires;
Figure 11 shows an inter SGSN handover;
Figure 12 shows a situation where a mobile station requests a change in quality of service; and
Figure 13 shows a situation where a GGSN requests a change in quality of service.

### Description of Preferred Embodiments of the Invention

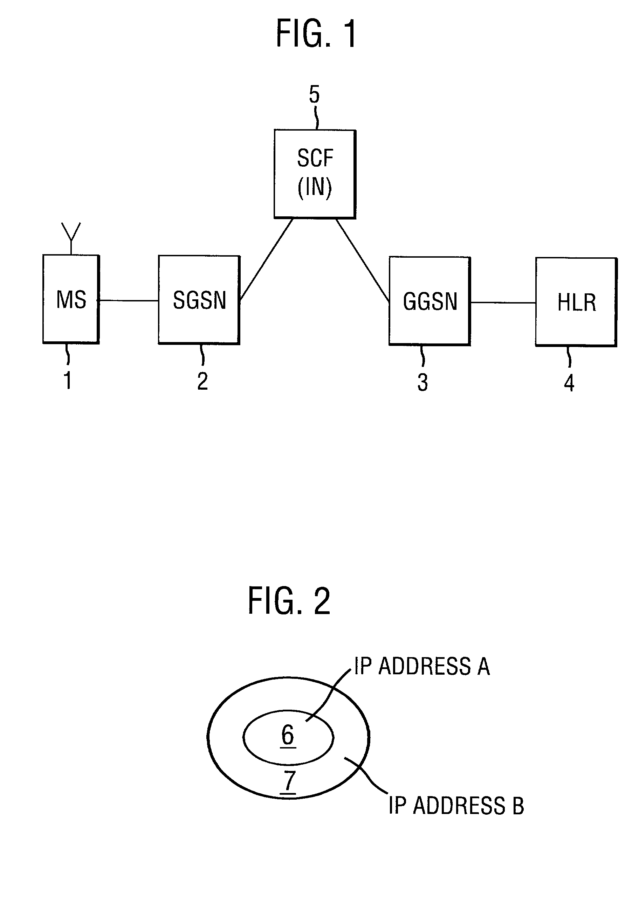

Figure 1 shows part of a telecommunications system when a mobile station (MS) 1 is roaming, that is, is receiving service in a network other than its home network. The mobile station 1 communicates through a serving GPRS support node (SGSN) 2, this communicates with the Gateway GPRS Support Node (GGSN) 3 associated with the home network and from here to the home location register (HLR) 4. In the present invention, essentially, messages between the SGSN 2 and GGSN 3 are intercepted and routed to an intelligent network node (IN) 5. This is designated as the SCF (Service Control Function) and is essentially an implementation, typically in software, at a service control box. At the IN, any desired application can be run. Preferably, this is an application relating to prepaid service so that various functionalities and parameters relating to the prepaid status and functioning of the mobile station (or, more particularly, the subscriber and user of the mobile station) can be performed at the IN 5. This then does not require the use of a specific protocol between the network node where the user is attached, and the intelligent network servicer.

Most preferably, GPRS tunnelling protocol (GTP) messages sent between the networks are intercepted at the intelligent network node 5. Typically, these will be GTP messages that are sent from the SGSN in the visited network, to the home GGSN 3, as shown in Figure 1. The protocol of GTP messaging is known to those skilled in the art, and reference is made to 3^{rd} Generation Partnership Project; Technical Specification TS29.060 (Release 1999), which relates to General Packet Radio Service (GPRS); GPRS Tunnelling Protocol (GTP) across the Gn and Gp Interface.

IP masking may be used to enable the interception and re-routing. This is shown schematically in Figure 2.

When mobile station 1 sets up a session with an SGSN 2, the SGSN first has to obtain an IP address and it will generally obtain this from a domain name server (DNS) ―(not shown). This will be IP address A in the figure. Masking is then carried out so that the packet of data 6 bearing IP address A is then masked, or integrated within, a packet 6 which is given another IP address B which is related to the intelligent network node IN 5. Accordingly, the initial destination of the packet 7, which includes packet 6, will be that of the IN 5 and the message will be routed accordingly. At the IN 5, the initial packet 6 can be extracted from packet 7 and the relevant processing done. The message can then be routed onwards to GGSN 3 using its normal IP address, or an IP address obtained by it in the normal manner.

IP address masking is known for other purposes by those skilled in the art.

It is assumed that in the particular GPRS system, updating PDP context allows for changes to be made in various parameters, such as in quality of service.
It is assumed that if the update PDP context is sent with no change, then a session is not aborted by the GGSN.

Further assumptions that may be made are as follows:

Firstly, under a location update, it is assumed that the period from an update PDP context response to the start of sending traffic PDU's to a mobile is negligible, i.e. that location updating is quick so that any delay will not affect the timed rating in the IN. It is also assumed that signalling messages can indeed be updated and that the SGSN is capable of sending signalling messages to the IN, in its IP routing tables.

Preferably, an SGSN is adapted to trigger for all IMSI's (International Mobile Subscriber Identities), i.e. all individual users or subscribers. Alternatively, the SGSN may be arranged to trigger only for a predetermined range of IMSI's that are prepaid or that obey some other condition or account status.

Preferably, the IN or, more accurately, the SCF, is arranged to ignore messages for users where it has no prepaid account.

In a modification, different SCF's (INs) may be provided so that the appropriate GGSN or SGSN can carry out different masking of messages to route to different INs as necessary.

Many different types of action can be obtained by using systems in accordance with the present invention. In one particular signalling messaging protocol which can be used, the following are some of the features which can be useful.
- Create PDP (Packet Data Protocol) Context Request Response ― the GGSN can change QoS (Quality of Service).
- Update PDP Context Request Response ― the GGSN can change QoS.
- Delete PDP Context Request includes extensions (of allocated time or volume (number of bits) for example ― SGSN to GGSN for MS or SGSN initiated disconnect.
- Delete PDP Context Response ― SGSN to GGSN with extensions MS or GGSN initiated disconnect.
- If the SCP returns extensions with allocated time T=0, and allocated volume = 0, then the SGSN can release the PDP Context.
- The SCF can use the tunnel ID (IMSI and NSAPI to separate out the various simultaneous legs of the call.
- SGSN Context Response has actual time and volume (actual volume being the volume used since the last of Create PDP Context was sent) ― this allows for tariff or Quality of service changes.
- If a Dialogue cannot be started since insufficient credit remains on a user's account, then ensure correct release message to stop SGSN re-attempting next GGSN ― sent by DNS.
- Set Private extension to ignore, in case GGSN does not understand them.
- Use SMS (Short Messaging Service) and email for notifications to user.
- Echo Request and Response from SCP to SGSN, and SCP to GGSN - for example not more often than every 60 seconds. This may be set by default to check for existence of an element. The default may be every 1 hour for example.

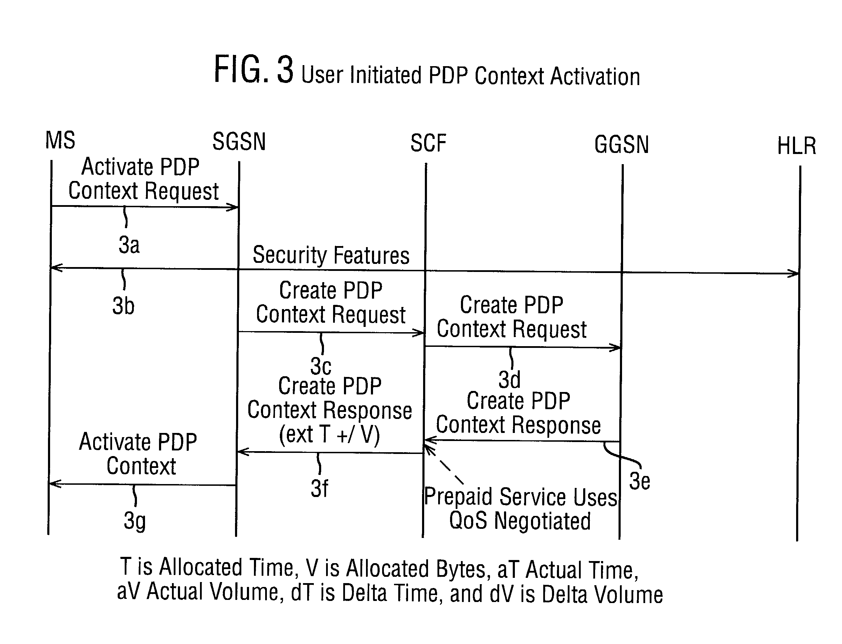

Figures 3 to 13 show some examples of the various messages and actions which can take place. Note that these comprise a non-exhaustive list only and many other messages and types of signalling and functionality may be used in embodiments of the invention. In the Figures T represents allocated time, V is allocated bytes, aT is actual time, aV actual volume, dT is delta time and dV is delta volume.

The SCF is considered to operate at or through an IN node through which GTP messages are intercepted.

Figure 3 shows user initiated PDP context activation. At initial step 3a, the mobile station 1 activates a PDP context request. A layer of security features 3B is shown and the SGSN transmits a create PDP context request to the SCF, using IP masking for example as described above. The SCF then transmits a create PDP context request to the GGSN 3d and this then replies with a create PDP context response 3e. Assuming the functionality of the SCF is a prepaid service, then the prepaid service has a particular quality of service negotiated. The SCF sends a create PDP context request (EXT T ± V) 3f to the SGSN which then sends a signal to the mobile station 1 activating PDP context 3g.

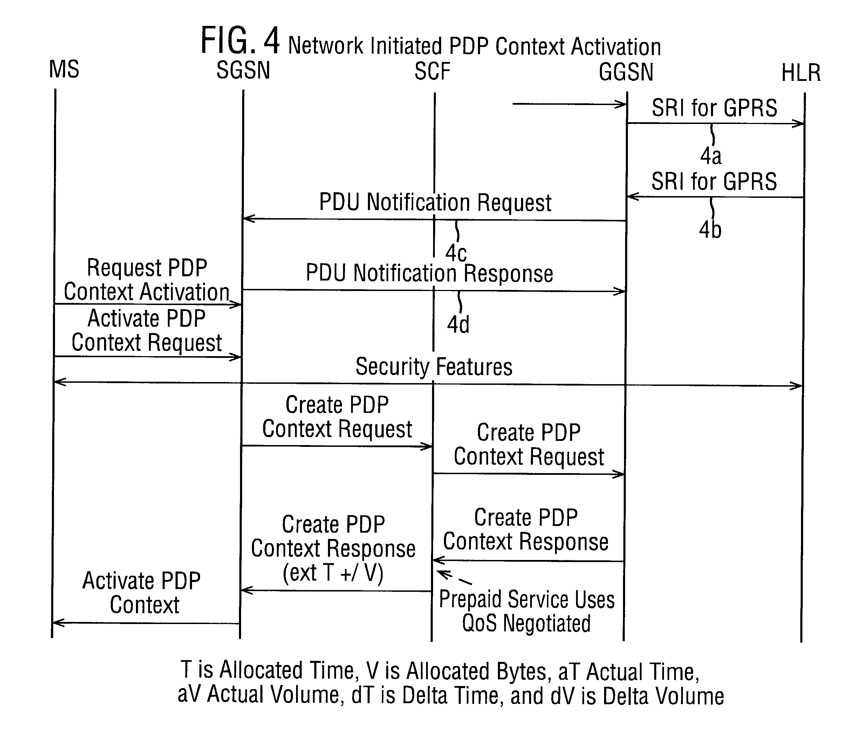

Figure 4 illustrates PDP context activation which is initiated by the network itself, rather than by the user. In this case, the GGSN communicates with the HLR at steps 4a and 4b. PDU notification request and notification response are then respectively sent to and from the SGSN (4c, 4d). The mobile station enters a request PDP context activation message 4E and after this the same procedure as in Figure 3 follows.

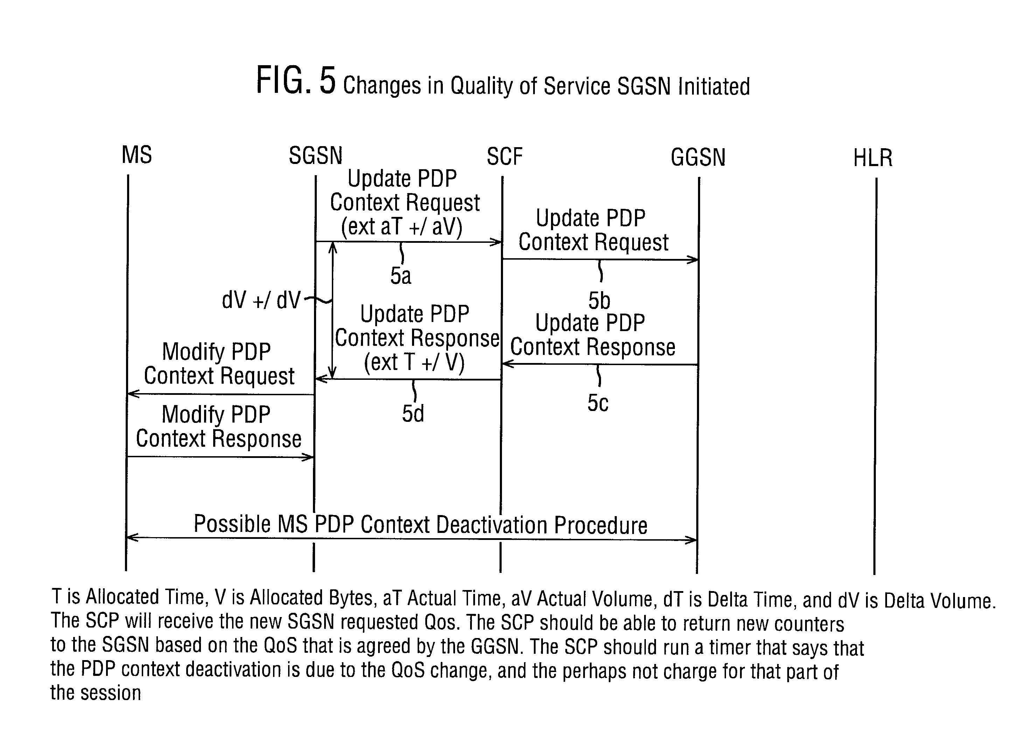

Figure 5 shows a situation where changes in quality of service are initiated by the SGSN. In the Figure, the SGSN transmits an update PDP context request 5a, which is a request for a particular quality of service (QoS). The SCF receives the new SGSN requested QoS and by communicating (5b, 5c) with the GGSN is able to agree a new QoS so that it returns new counters to the SGSN based on the QoS that is agreed by the GGSN. These are returned in message 5d. The SCF should preferably run a timer (not shown) which indicates that PDP context deactivation is due to a change in QoS and thus, in a prepaid situation, that the user should not be charged for that part of the session.

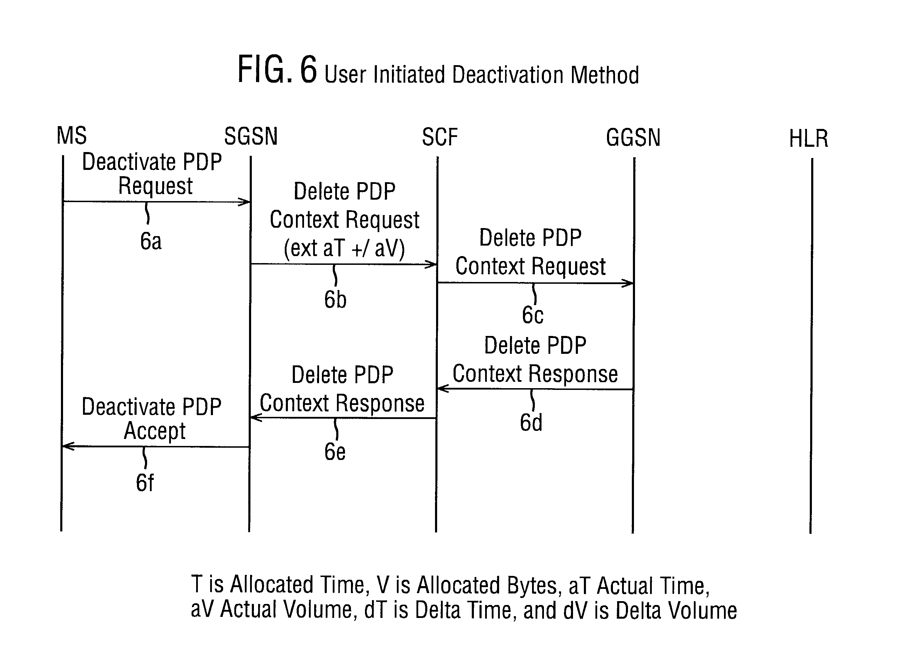

Figure 6 shows a user initiated deactivation method. The user will of course wish to deactivate when he has finished a call or ended his requirement for data, or perhaps for other reasons. The mobile station transmits a deactivate PDP request 6A. This causes the SGSN to transmit a request, via the SCF to the GGSN (6a, 6b) and the GGSN responds with a delete PDP context response 6d, 6e via the SCF. The SGSN then transmits a deactivate PDP accept message 6f to the mobile station to deactivate. Since the SCF is involved, details of the customers prepaid status and charging can be updated very quickly.

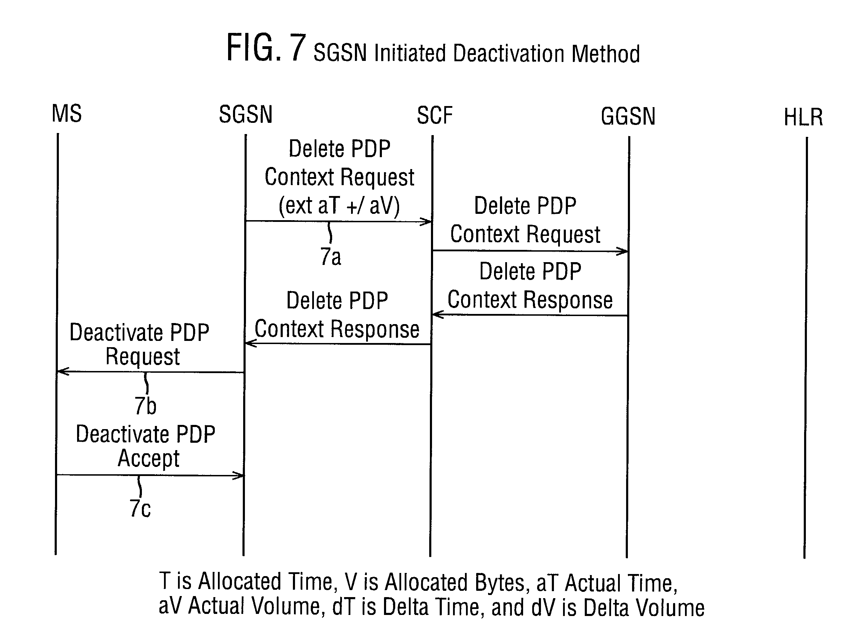

Figure 7 shows an SGSN initiated deactivation method. The SGSN may have to deactivate a call when it has run out of capacity for example, or have some sort of hardware or software failure. This follows a similar structure to that of Figure 6 except the delete PDP context request is instigated directly at the SGSN (7a). At the end of the process, the mobile station is sent a message requesting that it deactivates PDP, 7b, and then has to accept this 7c.

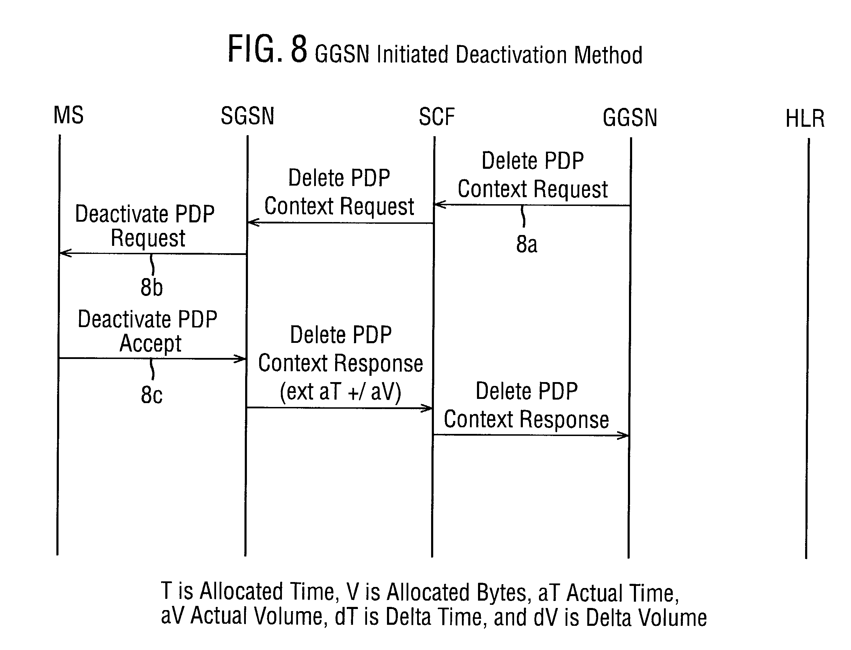

Figure 8 shows a GGSN activated deactivation method. The GGSN may wish to initiate deactivation for similar reasons to an SGSN and a similar process ensues. In this case, the delete PDP context request is instigated at the GGSN 8a. The mobile station has to receive a request 8b to activate PDP and to accept this 8c.

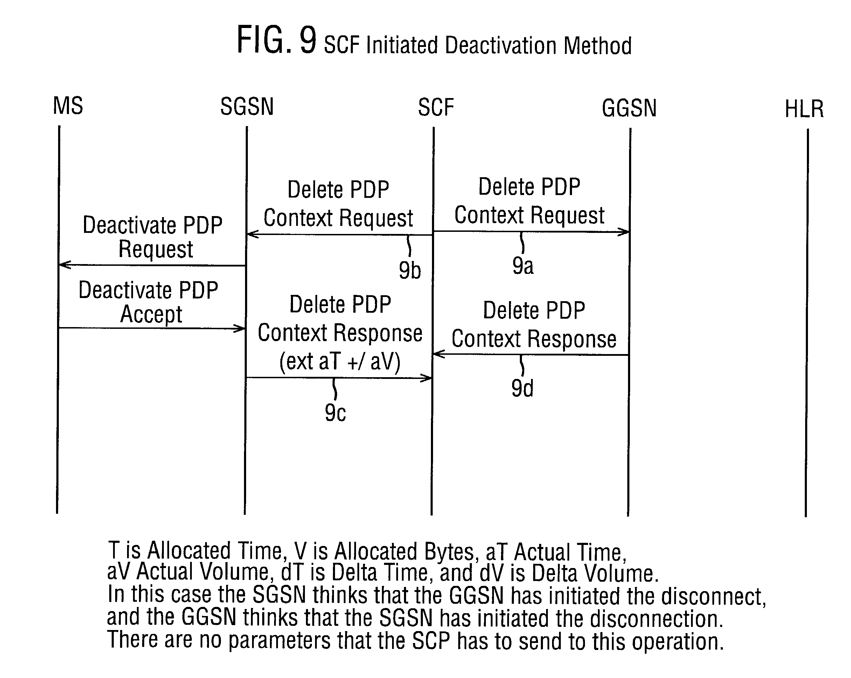

Figure 9 shows an SCF initiated deactivation method. In this case, the SCF transmits signals both to the GGSN and to the SGSN requesting deletion of PDP context, 9a, 9b. These must then both respond back to the SCF, 9c, 9d.

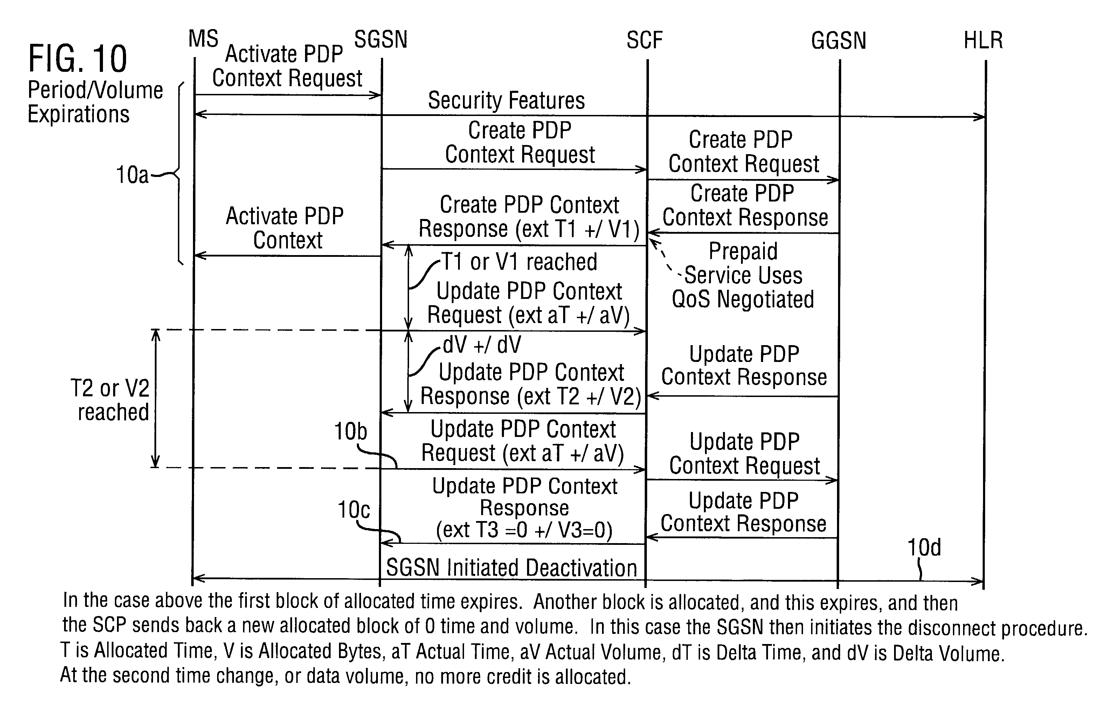

Figure 10 shows a situation for period/volume explorations. A GPRS mobile station or user terminal may have more than one session running at the same time, generally corresponding to more than one open window on a computer running a windows (RTM) type graphical user interface. For example, the mobile station may have a first "window" open on which a TV broadcast is being viewed, and may have a second "window" open in which a web browser is being used to study web pages. It is possible to allocate a volume of data (an amount of bits) or a particular credit, be it financial or otherwise, to each window independently. In the Figure, a first set of commands 10a activates a first block of allocated time. Once this allocated time or volume T1 or V1 is reached, then a further block can be allocated. The further block is requested by the SGSN at 10b (request for extra actual time and/or actual volume 10a and this block is then used until it expires after time T2 (or volume V2). After this time, the SGSN transmits a further update PDP context request (EXTaT±aV). However, in this example no more time or volume is available to the prepaid customer and so the SCF sends back a new allocated block of zero time and volume 10c (EXTT3=0 and/or V3=0). Upon receiving this, the SGSN then initiates a disconnect procedure 10d. This is possible because the SCF stores, or can obtain, details of the customer's credit and so it can allocate further blocks of time until the credit has expired, at which case it can initiate deactivation by failing to allocate any new blocks of time or volume.

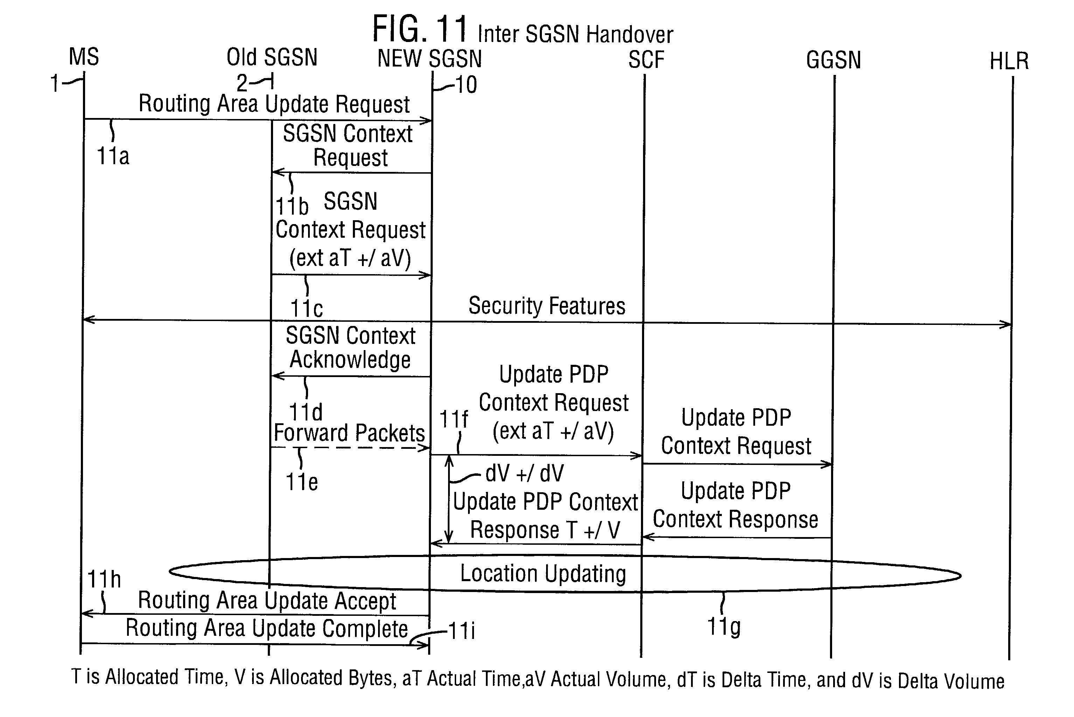

Figure 11 shows an inter SGSN handover. When a user is moving around, clearly, at some stage, the network with which the user is registered will change and so handover must be achieved between two adjacent SGSN's. In the Figure, the mobile station 1 transmits a request to a new SGSN 10 (11a). This then requests SGSN context from the old SGSN 2 for a message 11b. An SGSN context request for additional time or volume is then returned 11c. After SGSN context has been acknowledged 11d (forwarded 11e) then an update PDP context request is sent from the new SGSN to the SCF, 11f, using interception such that it reaches the SCF. Location updating then generally takes place 11f and once this is complete, a routing area update accept message 11h is sent to the mobile station which then sends a message that the routing area update is complete 11l. Further transmissions then take place solely using the new SGSN and inter SGSN handover has been completed.

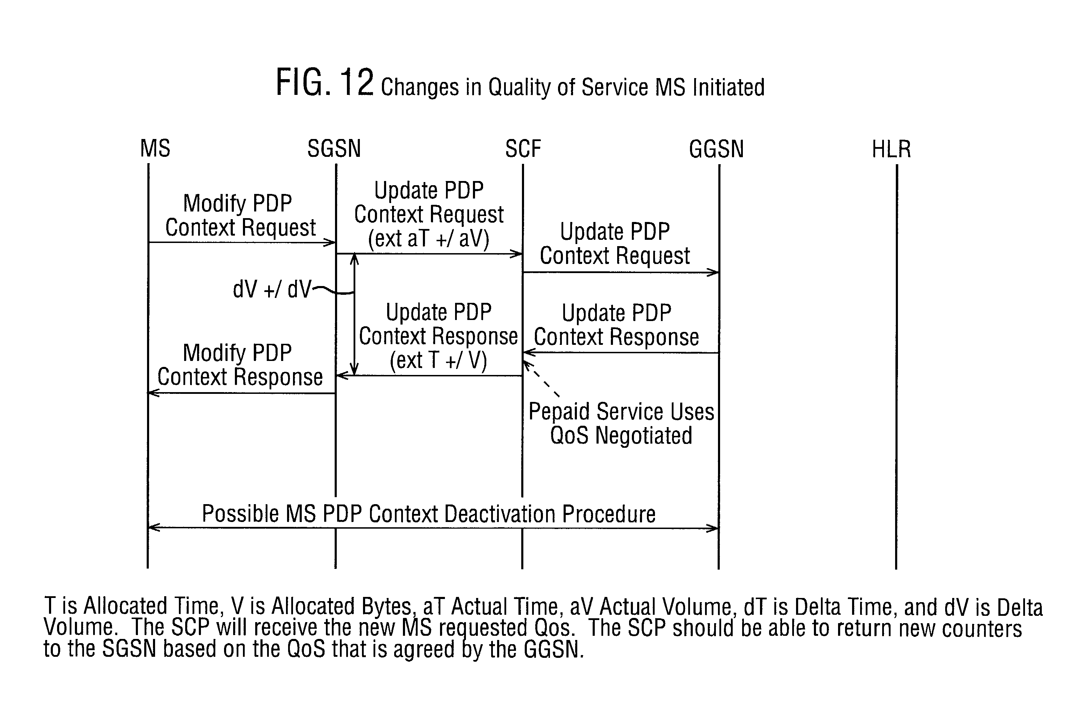

Figure 12 shows changes in QoS initiated by the mobile station. Essentially, the SCF receives a new quality of service request from the mobile station MS. The SCF can then return new counters to the SGSN based on the quality of service that is agreed by the GGSN.

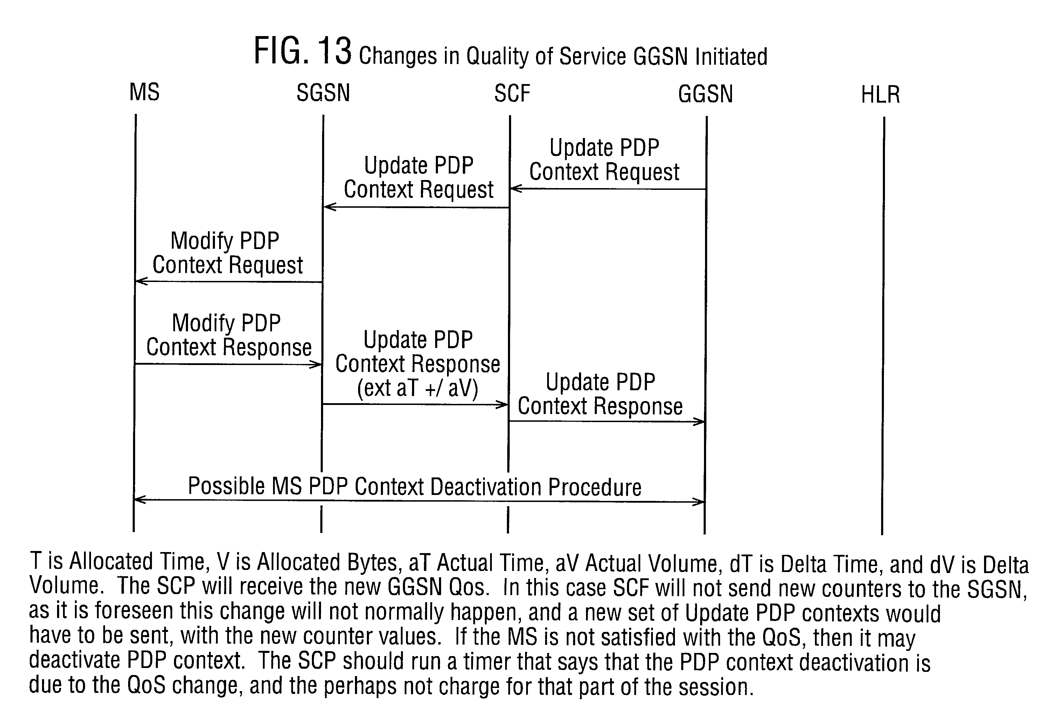

Figure 13 shows the situation when changes in quality of service are initiated by a GGSN. The update PDP context request initiates at the GGSN 13a in this case. The SCF receives the new GGSN QoS. In this case, the SCF does not send new counters to the SGSN, as it is foreseen that this change will not normally happen, and a new set of update PDP contexts would then have to be sent, with new counter values. If the MS is not satisfied with the QoS, then it may deactivate PDP context. Again in this case, the SCF preferably runs a timer which indicates that the PDP context deactivation is due to a change in quality of service from the network and this can avoid charging the subscriber for that part of the session.

## Claims

1. A GPRS telecommunications system comprising a plurality of networks, wherein a mobile terminal which is associated with a first network, when using a second network, communicates via a serving node associated with the second network to a serving node associated with the first network, wherein GPRS tunnelling protocol messages sent between the serving nodes are intercepted at an intelligent network node and wherein a specified application or set of applications is run at the intelligent network node.

2. A system as claimed in Claim 1, wherein the application, or set of applications, relates to prepaid subscribers to a telecommunications service.

3. A system as claimed in Claim 1 or Claim 2, wherein message interception is achieved by Internet Protocol Masking.

4. A system as claimed in any of Claims 1 to 3, wherein the serving nodes are a serving GPRS serving node and a gateway GPRS serving node.

5. A method of running an application, or a set of applications, on a GPRS telecommunications system, comprising intercepting GPRS tunnelling messages between serving nodes at an Intelligent Node, and running the application at the Intelligent Node.

6. A method as claimed in Claim 5, wherein the serving nodes are an SSGN and a GGSN.

7. A method as claimed in Claim 5 or Claim 6, wherein message interception is achieved by Internet Protocol Masking.

8. A method as claimed in any of Claims 5 to 7, wherein the application or set of applications related to prepaid subscribers is a telecommunications service.

9. A GPRS system substantially as hereinbefore described with reference to, and as illustrated by, any of the accompanying drawings.

10. A method of running an application substantially as hereinbefore described with reference to any of the accompanying drawings.
